Europäisches Patentamt

European Patent Office

Office européen des brevets

(11) Publication number: **0 461 751 A1**

# EUROPEAN PATENT APPLICATION

(21) Application number: 91303717.2

(22) Date of filing: 24.04.91

(51) Int. Cl.⁵: **B32B 17/10**, B32B 31/00,
C03C 27/12

(30) Priority: 15.06.90 US 538455

(43) Date of publication of application:
18.12.91 Bulletin 91/51

(84) Designated Contracting States:
DE FR GB

(71) Applicant: **FORD MOTOR COMPANY LIMITED**
**Eagle Way**
**Brentwood Essex CM13 3BW(GB)**
(84) **GB**

Applicant: **FORD FRANCE S. A.**
**B.P. 307**
**F-92506 Rueil-Malmaison Cédex(FR)**
(84) **FR**

Applicant: **FORD-WERKE**
**AKTIENGESELLSCHAFT**
**Werk Köln-Niehl Henry-Ford-Strasse**
**Postfach 60 40 02**
**W-5000 Köln 60(DE)**
(84) **DE**

(72) Inventor: **Gajewski, Kenneth J.**
**24434 Crescent Drive**
**Woodhaven, Michigan 48183(US)**

(74) Representative: **Messulam, Alec Moses et al**
**A. Messulam & Co. 24 Broadway**
**Leigh on Sea Essex SS9 1BN(GB)**

(54) Process for laminating glasings using tacked interlayer laminae.

(57) A process for preparing laminated safety glazings having a plurality of interlayer laminae includes the initial step of tacking together the laminae to maintain their registry during handling and insertion of the laminae between glass sheets for the subsequent lamination of the assembly.

EP 0 461 751 A1

This invention relates generally to a process for laminating glazings, and more particularly, to a process for tacking a plurality of interlayer laminae to keep them in registry during lamination of a windshield or other safety glazing.

The lamination of sheets of glass and interposed polymeric layers to produce safety glass laminates, e.g., automotive windshields, is well known. Such composites are effective for reducing serious injuries which could otherwise result by bodily ejection from an automobile through a shattered single pane windshield upon impact during an automobile accident.

Windshields are typically produced by first preshaping two curved glass sheets, and thereafter interposing a layer or layers of polymeric materials therebetween. This assembly is then subjected to heat and pressure to effectively laminate the individual components into a unitary windshield. Generally, a monolithic polymeric interlayer having a gradient shade band thereon is placed onto one of the apposing surfaces of one of the curved glass sheets, the mating glass sheet is superimposed over the interlayer material, and the assembly is conveyed through a series of heaters and rolls which press the assembly together while expelling air. Lamination temperatures range up to about 300°F, and pressures are generally from about 25 psi to about 300 psi using segmented rolls and an articulated platform. Alternatively, or as a final process step, the assembly is de-aired utilizing a peripheral evacuation gasket or vacuum bag, and laminated at an elevated temperature under pressure in an autoclave. See, for example, U.S. Patent No. 2,700,007 to Dennison et al.

Polyvinyl butyral is typically used as the organic interlayer material in modern automotive windshields. Recently, other polymeric materials have been found to provide improved properties, either alone or in combination with polyvinyl butyral or each other. Such materials include polyvinyl chloride, polyesters, polyurethanes, polyolefins, and copolymers of ethylene and vinyl acetate.

When two or more discrete layers of polymeric materials are to be employed together in a laminated glazing, it is often difficult to maintain the individual interlayer laminae in registry with one another when interposing them between the curved glass sheets. Thus, a number of glazings are manufactured which have regions at their edges where at least one of the polymeric laminae is absent. These defective glazings must be scrapped at great cost. Additionally, the time required to individually place different polymeric films between the superposed glass sheets causes the efficiency of the manufacturing process to decrease and the cost for each finished glazing to increase.

It is known to join together a plurality of identical polymeric articles, to temporarily maintain their predetermined proximity and orientation with one another. U.S. Patent No. 3,021,947 discloses that a stack of polyethylene bags may be fused together at their edges by the application of localised heat to the edges of the bags. Thereafter, an individual bag may be torn from the fused portion of the stack of bags, and the individual bag may be used, for example, to package a purchased item. The patent does not suggest the use of such a process for producing laminated structures, e.g., automotive or architectural safety glazings.

It would be desirable to maintain the orientation and registry of multiple individual polymeric laminae when interposing them between superposed glass sheets prior to lamination of the assembly to form a safety glass laminate such as, for example, a windshield. This would simplify and reduce the time required for manufacturing such laminates, and eliminate scrap caused by the absence of one or more laminae at regions near the edges of the laminate due to misalignment of individual laminae during the construction of the assembly.

According to the invention there is provided a process for preparing a laminated glazing having a plurality of interlayer laminae, comprising the steps of:

A. providing a plurality of superimposed polymeric interlayer laminae;

B. tacking the interlayer laminae to form connecting bridges between adjacent laminae, the connecting bridges formed thereby being sufficient in size and number so as to maintain registry of the laminae while not inhibiting the flexibility of the laminae during the subsequent handling thereof;

C. interposing the tacked, superimposed laminae intermediate two sheets of glass; and

D. laminating the glass sheets and tacked, superimposed laminae.

The process for preparing laminated safety glazings embodying the present invention deploys tacking (face-to-face fusions at a non-perforated zone) and is particularly useful for manufacturing automotive safety glazings, e.g., windshields, and architectural safety glazings.

It is known to manufacture safety glazings comprising two sheets of glass and a plurality of polymeric layers laminated therebetween. Generally, the individual polymeric films are separately interposed between the glass sheets, and arranged in such a fashion so as to be in superimposed, coextensive relationship with one another and with the glass sheets. Polymeric layers so arranged are said to be in "registry" with one another. Alternatively, a plurality of polymeric films may be separately arranged in a superimposed assemblage, wherein the polymeric films are in registry with one another and thereafter interposed as a unit between the glass sheets. In either case, due to the slippery nature of polymeric materials, the films which are assembled in registry readily become disoriented during handling and the initial stages of the lamination process. This tendency to slide upon one another and thereby become disarranged is especially problematic when the polymeric films are assembled in superimposed relationship, to form an interlayer assemblage, prior to insertion between the glass sheets. However, the preparation of a multi-layered assemblage which is thereafter inserted between two glass sheets is the preferred method for manufacturing laminated safety glazings.

The instant invention is directed to a process for preparing laminated glazings having a plurality of interlayer laminae, wherein the stacked interlayer assemblage is tacked prior to its interposition between the glass sheets, to maintain registry between the interlayer laminae between the time the interlayer assemblage is manufactured and the time the assemblage is used to prepare the laminated glazing. By the term "tacked" as it is used herein is meant that the adjacent major surfaces of the interlayer laminae are fused together at one or more points throughout the plane of the assemblage. The tacking process generally may be accomplished by bringing a heated tool into contact with one or both exposed major surfaces of the interlayer assemblage, at various points over the surface of the assemblage, to heat the individual laminae and fuse them together in the regions in proximity to the points of contact between the heated tool and the interlayer assemblage. Connecting bridges are thereby formed between adjacent polymeric films, each bridge establishing a firm bond between adjacent laminae, yet being of such restricted dimension that the bridges do not impair the flexible nature nor handleability of the interlayer assemblage.

A plurality of tacked regions may be necessary to maintain registry of the assemblage of interlayer laminae. The required number of tacked regions is dependent upon the sizes and characteristics of the individual laminae, and may be readily determined by one ordinarily skilled in the art of preparing laminated glazings. At least one tacked area is required. Likewise, the dimensions of the tacked regions are a matter of choice, and depend upon the configuration of the contact surface of the heated tool, the contact heating time, the pressure applied by the tool to the exposed surface of the assemblage, and the characteristics of the individual laminae. The heat applied by the tool must, of course, be adequate to cause the laminae materials to soften and fuse one to another, but must not be so great as to allow the tool to substantially penetrate the outer layer of the interlayer assemblage. Other methods of tacking may also be employed such as, for example, using microwave energy to fuse the laminae at one or more points throughout the assemblage.

Any of the commonly known interlayer polymeric materials may be used to practice the present invention, including but not limited to, polyvinyl butyral, copolymers of ethylene and vinyl acetate, polyvinyl chloride, polyesters, polyurethanes, polyolefins, and blends and copolymers thereof. The polymeric materials may furthermore contain conventional polymer adjuvants such as, for example plasticizers, fillers, stabilisers, dyes, pigments, ultraviolet light absorbers, and the like. The number and kinds of polymeric films employed in the laminated glazing will, of course, be determined by the desired performance characteristics for the ultimately produced safety glazing.

After the interlayer assemblage has been tacked according to the present invention, it is inserted intermediate two sheets of glass. Any type of glass generally known in the art as useful for preparing safety glazings may be employed. A particularly useful type of glass is solda-lime-silica glass produced by the well known float glass process. The safety glazing may be prepared by laminating the tacked interlayer assemblage between two flat glass sheets to produce architectural safety glass, or by laminating the tacked interlayer assemblage between mating curved glass sheets to produce a curved safety glazing such as is typically used for an automotive windshield.

Procedures for laminating polymeric interlayers between glass sheets are well known in the art. Generally, the interlayer is interposed between apposing surfaces of two mating superposed glass sheets. The glass/interlayer assembly is then prepressed by passing it between a series of prepressing rolls, while at a temperature from about 150°F to about 300°F, to remove air from between the individual laminae of the assembly. The prepressed assembly is thereafter laminated in an oil or air autoclave under standard conditions which include temperatures from about 200°F to about 300°F and simultaneous pressures from about 150 psi to about 300 psi for up to two hours depending upon the interlayer polymeric materials used, the severity of curvature of the assembly, etc.

**Claims**

1. A process for preparing a laminated glazing having a plurality of interlayer laminae, comprising the steps of:

    A. providing a plurality of superimposed polymeric interlayer laminae;

B. tacking the interlayer laminae to form connecting bridges between adjacent laminae, the connecting bridges formed thereby being sufficient in size and number so as to maintain registry of the laminae while not inhibiting the flexibility of the laminae during the subsequent handling thereof;

C. interposing the tacked, superimposed laminae intermediate two sheets of glass; and

D. laminating the glass sheets and tacked, superimposed laminae.

2. A process for preparing a laminated glazing according to Claim 1, wherein the two sheets of glass comprise flat glass.

3. A process for preparing a laminated safety glazing according to Claim 1, wherein the two glass sheets comprise curved glass.

4. A process for preparing a laminated safety glazing according to Claim 1, wherein the tacking comprises contacting at least one exposed major surface of the superimposed laminae with a heated tool for a time sufficient to cause each individual lamina to fuse to any adjacent lamina.

5. A process for preparing a laminated safety glazing according to Claim 1, wherein at least one of the interlayer laminae is selected from the group consisting of polyvinyl butyral, a copolymer of ethylene and vinyl acetate, polyvinyl chloride, a polyester, a polyurethane, a polycarbonate, a polyolefin, and blends and copolymers thereof.

6. A process for preparing a laminated automotive glazing having a plurality of interlayer laminae, comprising the steps of:

A. providing a plurality of superimposed polymeric interlayer laminae, wherein at least one of the interlayer laminae is selected from the group consisting of polyvinyl butyral, a copolymer of ethylene and vinyl acetate, polyvinyl chloride, a polyester, a polyurethane, a polycarbonate, a polyolefin, and blends and copolymers thereof;

B. tacking the interlayer laminae to form connecting bridges between adjacent laminae, the connecting bridges formed thereby being sufficient in size and number so as to maintain registry of the laminae while not inhibiting the flexibility of the laminae during the subsequent handling thereof, by contacting at least one exposed major surface of the superimposed laminae with a heated tool for a time sufficient to cause each individual lamina to fuse to any adjacent lamina;

C. interposing the tacked, superimposed laminae intermediate two curved mating sheets of glass; and

D. laminating the curved glass sheets and tacked, superimposed laminae.

European
Patent Office

EUROPEAN SEARCH
REPORT

Application Number

EP 91 30 3717

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | | | B 32 B 17/10<br>B 32 B 31/00<br>C 03 C 27/12 |

**TECHNICAL FIELDS SEARCHED (Int. Cl.5)**

B 32 B
C 03 C

The present search report has been drawn up for all claims

| Place of search | Date of completion of search | Examiner |
|---|---|---|
| The Hague | 24 September 91 | VAN BELLEGHEM W.R. |